# EUROPEAN PATENT SPECIFICATION

(11) **EP 0 487 358 B1**
(45) Date of publication and mention of the grant of the patent: **03.07.1996**
(21) Application number: 91310797.5
(22) Date of filing: 22.11.1991
(51) Int. Cl.: B60R 25/10, G08B 13/04

(54) **Alarm systems**
Alarmsystem
Système d'alarme

(30) Priority: 22.11.1990 JP 319827/90; 02.04.1991 JP 21066/91
(43) Date of publication of application: 27.05.1992
(73) Proprietor: FUJITSU TEN LIMITED, Kobe-shi, Hyogo (JP)
(72) Inventor: Nose, Shinji, Kobe-shi, Hyogo (JP); Matsubara, Manabu, Kobe-shi, Hyogo (JP)
(74) Representative: Fane, Christopher Robin King

(56) References cited:
- WO-A-90/04529
- DE-A- 2 558 301
- DE-A- 3 613 858
- DE-A- 3 924 622
- GB-A- 2 210 486
- PATENT ABSTRACTS OF JAPAN, vol. 12, no. 120 (M685)(2967) 14 April 1988 & JP - A - 62247945 (SANJITSU KOGYO) 29.10.1987

## Description

This invention relates to alarm systems.

Various alarm systems have been developed in order to prevent or detect the burglary of automobiles or intrusion into a protected area. The detection means for detecting an alarm condition used in such alarm systems include ultrasonic waves, laser beams, heat sensors and the use of sound. In a detection method using sound, when acts such as knocking, boring, breaking, rupturing, etc., windows, doors, walls etc., occur, a sound having specific frequency components inherent to the materials is generated in accordance with the conditions of the material. Accordingly, it is possible to detect whether or not an alarm state occurs, by detecting and analyzing the resulting sound. A previously-considered alarm system can store, in advance, a glass smashing sound of a window pane of an automobile or a room and raise an alarm when the stored sound is actually generated. This "glass smashing" alarm system has a construction wherein a microphone disposed internally picks up the frequency (e.g. 4.7 KHz) inherent to glass smashing, and the relevant act is judged as occurring when this frequency is detected. This system could be used to assist in burglar-proofing automobiles, for example.

The glass smashing alarm system described above can inadvertently operate, however, when a different sound having the same frequency components as that of glass smashing occurs. It can also operate erroneously when vibration having a frequency close to that of the glass smashing sound is directly transmitted to an acoustic-electric convertor of the microphone. Such erroneous operations are likely to occur particularly when the microphone is disposed inside an instrument panel of the automobile.

Different aspects of the present invention can assist in reducing the possibility of occurrence of an erroneous alarm operation by considering, in particular, the generation of an artificial glass smashing sound with the passage of time.

According to a first aspect of the present invention there is provided an alarm device including:
acoustic sensor means operable to detect the occurrence of a preselected type of sound;
characterised by control means connected with the said acoustic sensor means and operable, in response to an initial detection of the said preselected type of sound by the said acoustic sensor means, to determine whether such detection occurs again within a preselected time period, and, if so, to cause an alarm signal to be produced by the device.

A preferred embodiment of an alarm system embodying the aforesaid first aspect of the present invention has a normal alarm mode, in which a preliminary alarm is raised for a short time when the preselected type of sound is initially detected, and a special alarm mode in which a main alarm is raised for a long time when the preselected type of sound is detected. Mode switching is effected in such a manner as to shift the operation mode to the special alarm mode at the end of the preliminary alarm, and to return the operation mode to the normal alarm mode at the end of the main alarm or after the expiry of the preselected time period without any detection of the preselected type of sound in the special alarm mode.

In such an embodiment the operation mode cannot be shifted to this special alarm mode unless the preselected type of sound is first detected in the normal alarm mode as a preliminary stage. Moreover, since the operation mode is returned to the normal alarm mode unless the preselected type of sound is detected within the preselected time period after the shift to the special alarm mode, the main alarm is not eventually raised in most cases if false sounds are sporadically generated, although the main alarm is raised when the glass smashing sound, as one of the alarming sounds, is generated many times when a window pane is smashed at the time of a burglary. Accordingly, the probability of the generation of an erroneous alarm can be reduced.

If the preselected type of sound is detected in the normal alarm mode, the operation mode may merely shift to the special alarm mode but, in a preferred embodiment, the preliminary alarm is generated for a short time. The preliminary alarm has the function of warning so as to encourage the burglar to cease the burglary at the initial stage when the window pane is first broken. If the intruder continues to smash the window pane irrespective of this preliminary alarm, the main alarm described above is raised because the possibility of the occurrence of a burglary is extremely high.

Incidentally, W0-A-90/04529 discloses an alarm system for an automobile, having a proximity sensor for sensing when a person comes within a predetermined distance of the automobile. When the proximity sensor first detects such an intrusion, a control module of the alarm system outputs a preliminary alarm (initial vocal warning) and, at the end of the warning, a vocal countdown is produced if it is detected that the intrusion is still continuing. At the end of the countdown a main alarm is sounded if the intrusion is still found to be still continuing then. However, the proximity detector is not continually monitored during the countdown, so that even if the intrusion persists for part of the countdown the main alarm will not be raised.

GB-A-2210486 discloses an automobile alarm system including an alarm device for use with a lock having switch means (key unlock switch) that are changed from a first condition (off) to a second condition (on) when the lock is changed from a locked condition to an unlocked condition. In this system, when the key unlock switch is turned on, indicating that the automobile door has been unlocked using the key, control means reset the alarm system.

An alarm device embodying a second aspect of the present invention includes acoustic sensor means operable to detect the occurrence of a preselected type of sound; and
control means connected with the said acoustic sensor means and connectible to the said switch means of such a lock, and operable, in response to detection of the said preselected type of sound by the said acoustic sensor means, to determine whether the said switch means are changed to the said second condition within a preselected time period, and, if not, to cause an alarm signal to be produced by the device.

Reference will now be made, by way of example, to the accompanying drawings, in which:
Fig. 1 is a general view showing an alarm system embodying the first aspect of the present invention;
Fig. 2 is a time chart illustrating operation of the Fig. 1 system;
Fig. 3 is a flowchart illustrating such operation;
Fig. 4 is a general view showing another alarm system embodying the second aspect of the present invention; and
Fig. 5 is a flowchart illustrating operation of the system shown in Fig. 4.

In a burglar-proof system embodying the invention to be described hereinafter, a glass smashing sound is a sound causing alarm and the system will provide a burglar-proof system for automobiles, by way of example. However, other embodiments of the present invention can work from different sounds and/or provide other types of security system for other types of property.

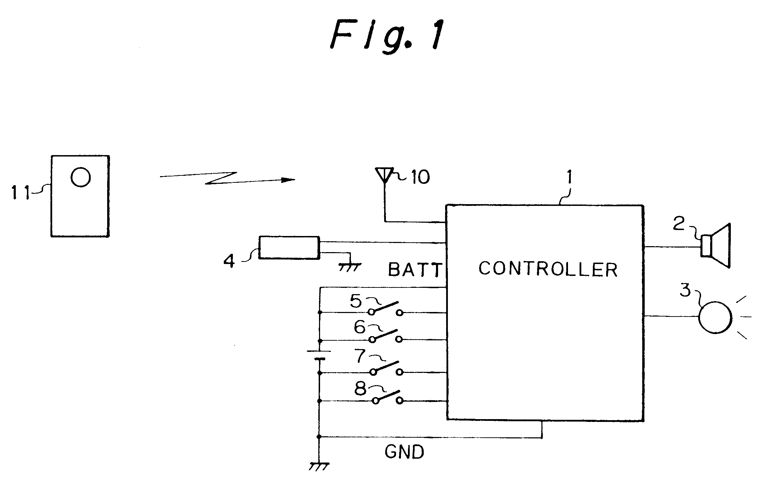

In the system of Fig. 1, reference numeral 1 denotes a burglar-proof controller; 2 is an alarm siren; 3 is an alarm light; and 4 is a microphone for picking up a glass smashing sound.

The state of a plurality of switches (sensors) 5 - 8 is inputted to the controller 1. For example, an alarm state is entered by the switches 5 and 6 and is released by the switches 7 and 8. The switches 5 and 6 are a door switch and a feed switch and the switches 7 and 8 are an ACC switch and an IG switch, respectively, for example. This alarm/release state can be remote controlled by a transmitter 11, and reference numeral 10 denotes a reception antenna for this remote control operation.

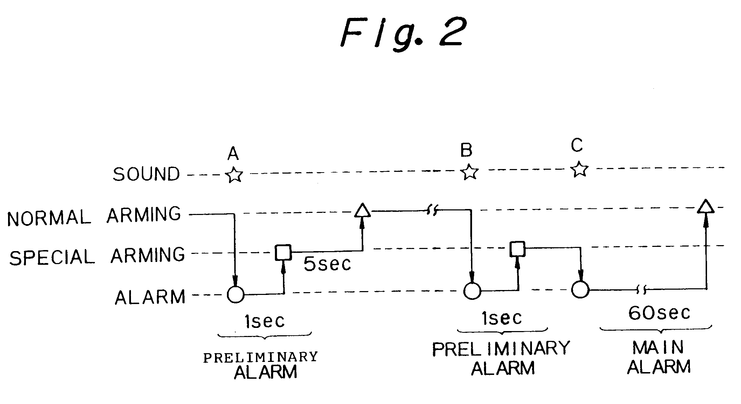

Fig. 2 is a timechart useful for explaining the operation of the Fig. 1 system. In Fig. 2, the term "Sound" represents a glass smashing sound, "Normal Arming" represents a normal alarming mode, "Special Arming" represents a special alarming mode and "Alarm" is alarm. The alarms include a preliminary alarm of 1 second duration and a main alarm of 60 seconds duration.

Fig. 2 shows the case when a glass smashing sound occurs three times, i.e. A, B and C. When the glass smashing sound A occurs during the normal alarming mode, the preliminary alarm is raised and 1 second later, the alarm shifts to the special alarming mode. This special alarming mode is limited to 5 seconds and the mode returns to the normal alarming mode unless a new glass smashing sound occurs within this period. Since no glass smashing sound occurs during the special alarming mode in this case, the sound A may be a false sound or a burglar may cease smashing the glass.

In contrast, when the glass smashing sound B is detected and the preliminary alarm is raised, the mode shifts to the special alarming mode and the next glass smashing sound C occurs within 5 seconds. Though this state can be considered as the state where the main alarm should be raised, the alarming period of the main alarm is limited to 60 seconds in order to prevent draining the battery of power and reduce the influence of erroneous operations. Then, the mode returns to the normal alarming mode.

In other words, the Fig. 1 embodiment has the normal alarming mode, in which a preliminary alarm is raised for a relatively short time commencing at the time of detection of the glass smashing sound, and the special alarming mode in which a main alarm is raised for a relatively long time commencing at the time of detection of the glass smashing sound, the mode of operation changing, at the end of the preliminary alarm, to the special alarming mode and then reverting to the normal alarming mode after a predetermined period of time passes if no glass smashing sound is detected during the special alarming mode or at the end of the main alarm if such an alarm is generated following detection of a glass smashing sound during the special alarming mode.

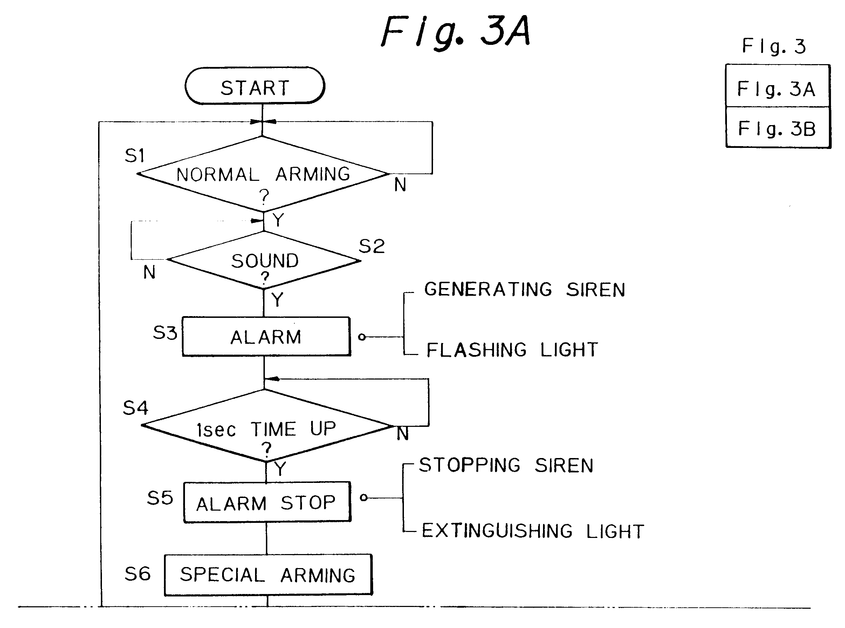

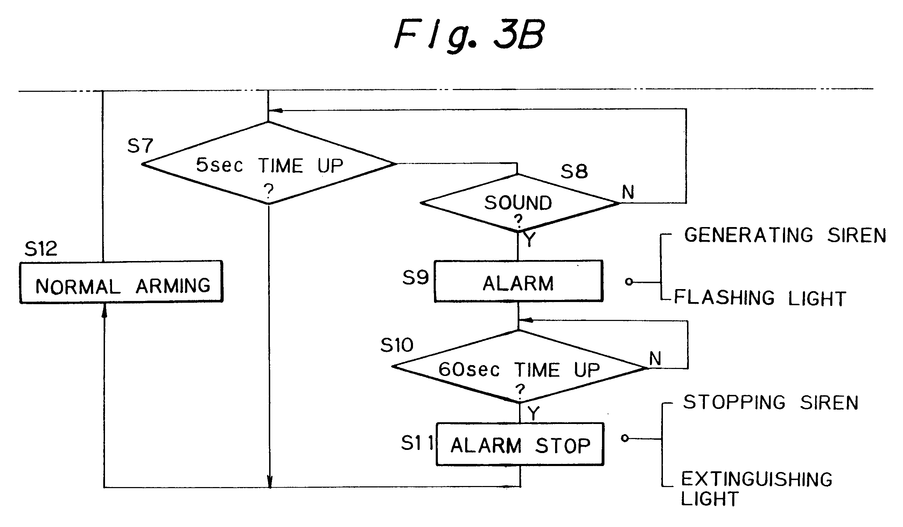

Fig. 3 shows a flowchart of the controller 1 for executing the process described above. This process starts when the operation mode enters the alarming state and waits for the normal alarming mode to be entered (Normal Arming) at step S1. If Y (yes) is obtained at this step S1, the glass smashing sound (Sound) is detected at the next step S2. The preliminary alarm in the normal alarming mode is limited to 1 second. Therefore, if the glass smashing sound is detected at the step S2, the alarm (Alarm) is raised only for 1 second at the next steps S3 to S5. After the alarm is stopped at the step S5, the operation mode shifts to the special alarming mode (Special Arming) at step S6 and this state is limited to 5 seconds at the next step S7. In the meantime, the controller 1 continues the monitor for the glass smashing sound at step S8 and, if such a sound is detected, the main alarm is raised for 60 seconds at steps S9 to S11. After step S11 is executed, the mode returns to the normal alarming mode at step S12 and the flow returns again to step S1. This also holds true of the case when 5 seconds passes at step S7.

As described above, the system of Fig. 1 provides the advantage that erroneous operation resulting from erroneous detection of a glass smashing sound can be minimized in the system for raising an alarm by detecting a glass smashing sound.

Next, a second embodiment of the present invention will be explained.

The burglar-proof system for automobiles described above can of course also be applied to the detection of intruders into houses and rooms and, in such cases, the alarm system can be set when the door of the said room/house is locked and the room/house not occupied.

However, if such a burglar-proof system having an alarming sound detection function, such as the glass smashing sound, is so constituted as to be reset by the ON operation of a key unlock switch (which is instantaneously turned ON when the door of the car/house/room is unlocked by the key), there remains the problem that if the key strikes the car body or the glass of the door of the room at the time of the unlocking operation, an erroneous alarm is likely to be raised by the sound at this time.

The second embodiment of the present invention is directed to solve such a problem. When the key strikes the body or the window pane of the car or the door of the room at a time when a burglar-proof system having the alarmed sound detection function, such as the glass smashing sound, is being reset, the present embodiment prevents an erroneous alarm from being raised by this sound.

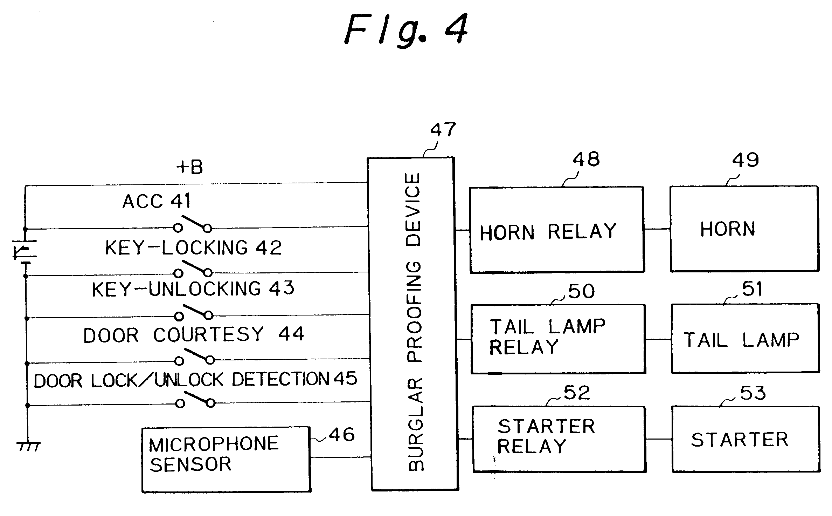

Fig. 4 shows an example of the burglar-proof system in accordance with the second embodiment of the present invention. Reference numeral 41 denotes an accessory switch; 42 is a key lock switch that is instantaneously turned ON when the door is locked by the key; 43 is a key unlock switch (switch means) that is instantaneously turned ON when the door is unlocked by the key as described above; 44 is a door courtesy switch that is turned ON when the door is open; 45 is a detection switch for detecting lock/unlock of the door (which is turned OFF when the door is locked and is turned ON when the door is unlocked); and 46 is a microphone sensor.

Here, the burglar-proofing apparatus 47 is set (security set) when all the doors, are closed and are locked (key lock switch turned ON), and is reset (security reset) when the door is unlocked (key unlock switch turned ON) or when the accessory switch is turned ON. When the burglar-proofing apparatus is set, if the door courtesy switch is turned ON (that is, the door is open) but the door has not been unlocked by the key, or if glass smashing is detected by acoustic sensor means of the apparatus based on the output from the microphone sensor 46, the alarm is raised (the horn 49 is operated through a horn relay 48 or a tail lamp 51 is turned ON through a tail lamp relay 50, for example), and a starter 53 is turned OFF through a starter relay 52, if necessary.

According to the construction described above, the burglar-proofing apparatus is reset without outputting the alarm if the key unlock switch is turned ON within t seconds (e.g. 10 seconds), starting from the detection of the alarming sound, and outputs the predetermined alarm if, following the detection of glass smashing, the key unlock switch is not turned ON within the t seconds (i.e. concluding that glass smashing is actually occurring).

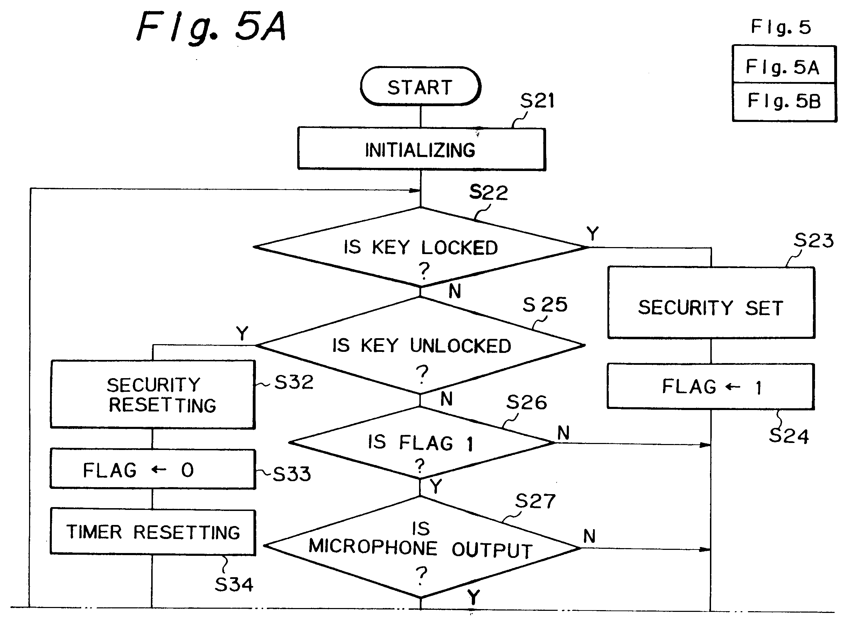

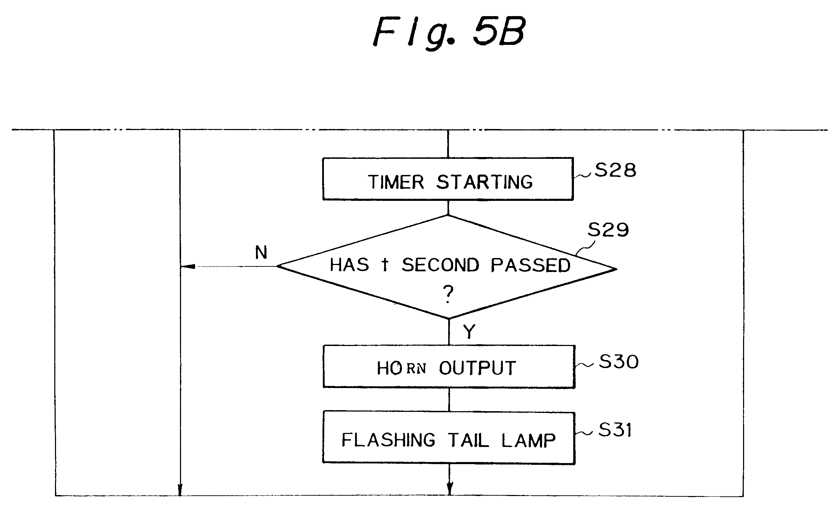

Fig. 5 shows a flowchart of the operation procedure of the burglar-proof system shown in Fig. 4. To begin with, initialization is effected at step S21 and both a flag and a timer are set to "0", respectively. Next, whether or not the key lock switch is turned ON is determined at step S22. If turned on ("Yes"), the flow proceeds to step S23, at which the security set is effected. The flag is then set to "1" at step S24.

If the key lock switch is not turned on ("No") at step S22, the flow proceeds to step S25, and it is determined whether or not the key unlock switch is turned ON. If "No", the flow proceeds to step S26, and it is determined whether or not the flag is 1 (that is, whether or not the system is in the security set state). If "Yes", the flow proceeds to step S27, and it is determined whether or not the output from the microphone sensor indicates that the alarming sound is occurring. If "Yes", the timer is started at step S28. Next, it is determined from the timer whether or not the t second's time (e.g. 10 seconds) has passed.

If the key unlock operation is effected before those t seconds elapse in the timer (that is, while the result of step S29 remains "No"), the flow proceeds to step S32 through steps S22 and S25 (at which step S25 proves "Yes") . The flag is then set to "0" and the timer is further reset at step S34.

On the other hand, if the key unlock switch is not turned ON within t seconds from the start of the operation of the timer (that is, if the result proves "Yes" at step S29), the horn is operated at step S30 (it being determined that glass smashing is taking place), and the tail lamp is turned ON and OFF repeatedly at step 31.

According to this embodiment, the erroneous detection of glass smashing when the key strikes the body during the resetting operation of the system by the key unlock operation, and the erroneous generation of the alarm due to this erroneous detection can be effectively prevented. In other words, the second embodiment of the present invention provides a burglar-proof system for automobiles, including a means for outputting a predetermined alarm when a predetermined sound, such as glass smashing, is detected, and a means for inhibiting this alarm when the key unlock switch is turned ON before the passage of a predetermined time from the detection of this sound.

## Claims

1. An alarm device including:
acoustic sensor means (4) operable to detect the occurrence of a preselected type of sound;
characterised by control means (1) connected with the said acoustic sensor means (4) and operable, in response to an initial detection (A/B) of the said preselected type of sound by the said acoustic sensor means, to determine whether such detection occurs again (C) within a preselected time period, and, if so, to cause an alarm signal to be produced by the device.

2. An alarm device as claimed in claim 1, wherein the said control means (1) are operable in response to such an initial detection (A/B) to cause an alarm signal to be produced within the said preselected time period.

3. An alarm device as claimed in claim 2, wherein the said alarm signal produced in response to such an initial detection (A/B) is a preliminary alarm signal that is shorter in duration than the said alarm signal produced if such detection occurs again (C), after the initial detection, within the said preselected time period.

4. An alarm device as claimed in claim 3, wherein the said control means (4) have a normal alarm mode (NORMAL ARMING) in which such an initial detection (A/B) can take place and a special alarm mode (SPECIAL ARMING) in which it is determined whether such detection occurs again (C) within the said preselected time period, the operating mode of the control means (4) being changed from the said normal alarm mode to the said special alarm mode at the end of the said preliminary alarm signal, and being returned to the normal alarm mode upon expiry of the said preselected time period if no such detection occurs again within that period.

5. An alarm device for use with a lock having switch means (43) that are changed from a first condition (OFF) to a second condition (ON) when the lock is changed from a locked condition to an unlocked condition, which device is characterised by:
acoustic sensor means (46, 47) operable to detect the occurrence of a preselected type of sound; and
control means (47) connected with the said acoustic sensor means and connectible to the said switch means (43) of such a lock, and operable, in response to detection of the said preselected type of sound by the said acoustic sensor means, to determine whether the said switch means (43) are changed to the said second condition (ON) within a preselected time period, and, if not, to cause an alarm signal to be produced by the device.

6. An alarm device as claimed in any preceding claim, wherein the said preselected type of sound is a glass-smashing sound.

7. Burglar-proofing apparatus for use in an automobile, including an alarm device as claimed in any preceding claim.

## Patentansprüche

1. Alarmvorrichtung, mit:
einer Akustik-Sensoreinrichtung (4), die betreibbar ist, um das Auftreten eines vorgewählten Sound-Typs zu detektieren,
**gekennzeichnet** durch eine Steuereinrichtung (1), die mit der akustischen Sensoreinrichtung (4) verbunden ist und in Abhängigkeit von einem anfänglichen Detektieren (A/B) des vorbestimmten Sound-Typs durch die Akustik-Sensoreinrichtung betreibbar ist, um zu bestimmen, ob eine solche Detektion erneut (C) innerhalb einer vorgewählten Zeitdauer auftritt und, wenn dies der Fall ist, die Vorrichtung veranlaßt, ein Alarmsignal zu erzeugen.

2. Alarmvorrichtung nach Anspruch 1, bei der die Steuereinrichtung (1) in Abhängigkeit von einer solchen Anfangs-Detektion (A/B) betreibbar ist, um das Erzeugen eines Alarmsignals innerhalb der vorgewählten Zeitdauer zu bewirken.

3. Alarmvorrichtung nach Anspruch 2, bei der das in Abhängigkeit von einer solchen Anfangs-Detektion (A/B) erzeugte Alarmsignal aus einem vorläufigen Alarmsignal besteht, welches in seiner Dauer kürzer ist als das Alarmsignal, welches erzeugt wird, wenn eine derartige Detektion erneut (C) nach der Anfangsdetektion und innerhalb der vorgewählten Zeitdauer auftritt.

4. Alarmvorrichtung nach Anspruch 3, bei der die Steuereinrichtung (4) einen normalen Alarmgabe-Modus (NORMAL ARMING) hat, bei dem eine derartige Anfangs-Detektion (A/B) stattfinden kann, und einen speziellen Alarmgabe-Modus (SPEZIAL ARMING) hat, bei welchem bestimmt wird, ob eine derartige Detektion erneut (C) innerhalb der vorgewählten Zeitdauer auftritt, wobei der Betriebsmodus der Steuereinrichtung (4) aus dem normalen Alarmgabe-Modus in den speziellen Alarmgabe-Modus am Ende des vorläufigen Alarmsignals geändert wird und, nach dem Verstreichen der vorgewählten Zeitdauer, in den normalen Alarmgabe-Modus zurückgeführt wird, wenn eine derartige Detektion nicht erneut innerhalb dieser Zeitdauer auftritt.

5. Alarmvorrichtung für die Verwendung mit einem Schloß, welches eine Schaltereinrichtung (43) besitzt, die von einem ersten Zustand (AUS) in einen zweiten Zustand (EIN) geändert wird, wenn das Schloß von einem geschlossenen Zustand in einen aufgesperrten Zustand geändert wird, wobei die Vorrichtung gekennzeichnet ist durch:
eine Akustik-Sensoreinrichtung (46, 47), die betrieben werden kann, um das Auftreten eines vorgewählten Sound-Typs zu detektieren, und
eine Steuereinrichtung (47), die mit der Akustik-Sensoreinrichtung verbunden ist und die mit der Schaltereinrichtung (43) eines derartigen Schlosses verbindbar ist und in Abhängigkeit von der Detektion des vorgewählten Sound-Typs durch die Akustik-Sensoreinrichtung so betreibbar ist, um zu bestimmen, ob die Schaltereinrichtung (43) in den zweiten Zustand (EIN) innerhalb einer vorgewählten Zeitdauer gewechselt wurde, und wenn dies nicht der Fall ist, zu bewirken, daß ein Alarmsignal durch die Vorrichtung erzeugt wird.

6. Alarmvorrichtung nach irgendeinem der vorhergehenden Ansprüche, bei der der vorgewählte Sound-Typ aus einem Glasbruch-Sound besteht.

7. Einbruch-Sicherungsgerät für die Verwendung in einem Automobil, mit einer Alarmvorrichtung nach irgendeinem der vorhergehenden Ansprüche.

## Revendications

1. Dispositif d'alarme comprenant :
un moyen (4) formant détecteur acoustique utilisable pour détecter l'occurrence d'un type de son présélectionné ;
caractérisé par un moyen de commande (1) connecté audit moyen (4) formant détecteur acoustique et utilisable en réponse à une détection initiale (A/B) dudit type de son présélectionné par ledit moyen formant détecteur acoustique, afin de déterminer si une telle détection se produit à nouveau (C) pendant une période de temps présélectionnée, et, si c'est le cas, de provoquer un signal d'alarme devant être produit par le dispositif.

2. Dispositif d'alarme selon la revendication 1, dans lequel ledit moyen de commande (1) est utilisable en réponse à une telle détection initiale (A/B) pour provoquer un signal d'alarme devant être produit pendant ladite période de temps présélectionnée.

3. Dispositif d'alarme selon la revendication 2, dans lequel ledit signal d'alarme produit en réponse à une telle détection initiale (A/B) est un signal d'alarme préliminaire ayant une durée plus courte que ledit signal d'alarme produit si une telle détection se produit à nouveau (C), après la détection initiale, pendant ladite période de temps présélectionnée.

4. Dispositif d'alarme selon la revendication 3, dans lequel ledit moyen de commande (4) a un mode d'alarme normale (ARMEMENT NORMAL) dans lequel une telle détection initiale (A/B) peut avoir lieu, et a un mode d'alarme spéciale (ARMEMENT SPÉCIAL) dans lequel il est déterminé si une telle détection se produit à nouveau (C) pendant ladite période de temps présélectionnée, le mode de fonctionnement du moyen de commande (4) étant modifié pour passer dudit mode d'alarme normale audit mode d'alarme spéciale, à la fin dudit signal d'alarme préliminaire, et repassant au mode d'alarme normale à expiration de ladite période de temps présélectionnée si une telle détection ne se reproduit pas pendant cette période.

5. Dispositif d'alarme à utiliser avec un verrouillage ayant un moyen (43) formant interrupteur qui passe d'une première position (ARRET) à une seconde position (MARCHE) lorsque le verrouillage passe d'un état verrouillé à un état déverrouillé, lequel dispositif étant caractérisé par :
des moyens formant des détecteurs acoustiques (46, 47) utilisables pour détecter l'occurrence d'un type de son présélectionné ; et
un moyen de commande (47), connecté auxdits moyens formant des détecteurs acoustiques, et pouvant être connecté audit moyen (43) formant l'interrupteur d'un tel verrouillage, et utilisable en réponse à la détection dudit type de son présélectionné par lesdits moyens formant des détecteurs acoustiques, afin de déterminer si ledit moyen (43) formant interrupteur est passé audit second état (MARCHE) pendant une période de temps présélectionnée, et, si ce n'est pas le cas, de provoquer un signal d'alarme devant être produit par le dispositif.

6. Dispositif d'alarme selon l'une quelconque des revendications précédentes, dans lequel ledit type de son présélectionné est un son de bris de glace.

7. Appareil antivol à utiliser dans une automobile, comprenant un dispositif d'alarme selon l'une quelconque des revendications précédentes.
